Europäisches Patentamt

European Patent Office

Office européen des brevets

(19)

(11) Veröffentlichungsnummer: **0 195 941 B1**

(12) **EUROPÄISCHE PATENTSCHRIFT**

(45) Veröffentlichungstag der Patentschrift: **11.12.91**

(51) Int. Cl.⁵: **B60H 1/00**

(21) Anmeldenummer: **86102415.6**

(22) Anmeldetag: **25.02.86**

(54) **Luftumwälzungseinrichtung für einen Omnibus.**

(30) Priorität: **23.03.85 DE 3510706**

(43) Veröffentlichungstag der Anmeldung:
**01.10.86 Patentblatt 86/40**

(45) Bekanntmachung des Hinweises auf die
Patenterteilung:
**11.12.91 Patentblatt 91/50**

(84) Benannte Vertragsstaaten:
**BE DE FR GB IT NL**

(56) Entgegenhaltungen:
**US-A- 2 103 104**
**US-A- 2 922 290**
**US-A- 4 324 286**
**US-A- 4 376 408**

**PATENT ABSTRACTS OF JAPAN, Band 9, Nr.**
**176 (M-398)[1899], 20. Juli 1985; & JP-A-60 45**
**418 (HITACHI SEISAKUSHO K.K.) 11-03-1985**

(73) Patentinhaber: **MAN Nutzfahrzeuge Aktienge-**
**sellschaft**
**Dachauer Strasse 667 Postfach 50 06 20**
**W-8000 München 50(DE)**

(72) Erfinder: **Geyer, Ludwig**
**Wettersteinstrasse 10**
**W-8031 Puchheim(DE)**

**Beschreibung**

Die Erfindung betrifft eine Luftumwälzungseinrichtung für einen Omnibus gemäß dem Oberbegriff des Anspruchs 1, wie sie z.B. aus der US-A-4,376,408 bekannt ist.

Ein solcher, vollklimatisierter Omnibus weist im Heck und oberhalb des Motorraumes einen Aufnahmeraum für eine Klimaanlage auf, in welchem ein kräftiges Gebläse angeordnet ist, welches für die Umwälzung der Innenluft sorgt.

Diese Innenluft wird durch mindestens eine Ansaugöffnung angesaugt, welche im Bereich der Hecksitzbank in der Trennwand angebracht ist, welche den Aufnahmeraum für die Klimaanlage vom Fahrgastraum trennt, also in der hinteren Abschlußwand des Omnibusses.

Die gereinigte und gekühlte Luft wird vom genannten Gebläse dann durch einen im Dachbereich angeordneten Kanal zu den im Bereich der einzelnen Fahrgastsitze angebrachten Luftaustrittsdüsen weitergefördert.

Um sicherzustellen, daß auch die vordersten, vom Gebläse am weitesten entfernten Luftaustrittsdüsen noch hinlänglich mit klimatisierter Luft versorgt werden, muß das Umluftgebläse einen erheblichen Druck aufbringen. Da andererseits besonders in heißen Ländern die Erwärmung der Fahrgastraumluft durch Sonneneinstrahlung und warme Außenluft, die bei Haltestellen in den Omnibus-Innenraum eindringt, besonders hoch ist, muß außerdem das Umluftgebläse einen sehr großen Luftumsatz bewirken. Infolge der erforderlichen hohen Leistung des Umluftgebläses ist dieses zwangsläufig auch geräuschvoll, wobei das Gebläsegeräusch durch die Ansaugöffnung oder Ansaugöffnungen hindurch hörbar ist. Ferner sind die Luftgeschwindigkeiten im Bereich der Ansaugöffnung oft verhältnismäßig hoch, so daß die Luft geräuschvoll in diese einströmt. Diese beiden Geräuschquellen führen zu einer erheblichen Lärmbelästigung der die Hecksitzbank, also die hinterste Sitzbank des Fahrgastraumes, einnehmenden Personen.

Außerdem ist die starke Luftströmung der Ansaugluft im Bereich dieser Personen belästigend und führt z.B. bei Rauchern dazu, daß ihnen ihr eigener Zigarettenrauch ins Gesicht geblasen wird. Ferner ist die Wirkung der Luftaustrittsdüsen, welche den auf der Hecksitzbank befindlichen Personen klimatisierte Luft zuführen sollen, durch die angesaugte, zu klimatisierende Fahrgastraum-Innenluft stark gestört; außerdem werden die auf der Hecksitzbank befindlichen Personen ständig von der erwärmten Innenraum-Abluft umströmt. Andererseits bildet sich im Fußbereich der hinteren Sitzbank eine Zone mit fast unbewegter Luft, in welche die Kaltluft absinkt, so daß die auf der hinteren Sitzbank befindlichen Personen neben dem Betriebsgeräusch der Luftumwälzungseinrichtung und unklimatisierter Luft im Brust-und Kopfbereich auch noch kalte Füße hinnehmen müssen.

Ein Teil dieser Unzuträglichkeiten könnte dadurch gemildert werden, daß man die Luftansaugöffnung vergrößert, doch es wäre dann ein so sperriger Luftleitungsschacht zwischen der Aufnahmeöffnung und dem Umluftgebläse erforderlich, der im Aufnahmeraum für die Klimaanlage nicht untergebracht werden könnte.

Ausgehend von dieser Problemlage liegt der Erfindung die Aufgabe zugrunde, die mit der Fahrgastraum-Innenluftansaugung verbundenen Unzuträglichkeiten für die die Hecksitzbank einnehmenden Personen zu mindern.

Diese Aufgabe wird durch die Merkmale des Anspruchs 1 gelöst. Hierbei ist die Ansaugöffnung erfindungsgemäß nicht im Kopfbereich der auf der Hecksitzbank befindlichen Personen angeordnet, sondern hinter der Sitzlehne der Hecksitzbank und zwar derart, daß sie von der Hecksitzbank abgedeckt ist. Hierdurch werden die an der Luftansaugöffnung entstehenden Geräusche einerseits und das durch die Luftansaugöffnung nach außen dringende Geräusch des Umluftgebläses andererseits von der Hecksitzbank selbst so stark abgeschirmt, daß sie für die auf der Hecksitzbank sitzenden Personen nicht mehr belästigend sind. Außerdem befinden sich Kopf und Brust der auf der Hecksitzbank befindlichen Personen in einer beruhigten Zone, in welcher der Luftstrahlverlauf der Luftaustrittsdüsen für die klimatisierte Luft in keiner Weise beeinträchtigt wird. Lediglich die Füße der genannten Personen befinden sich innerhalb einer Luftströmung, doch es handelt sich um eine Warmluftströmung, so daß der durch die Erfindung erreichte Zustand wenigstens nicht zu kalten Füßen führt. Im übrigen kann die Luftansaugöffnung sich über die gesamte Breite des Omnibusses erstrecken, so daß die an der Luftansaugöffnung auftretenden Geschwindigkeiten gering sind, denn der unterhalb der Sitzbank zur Verfügung stehende Raum reicht zur Unterbringung eines Luftleitschachtes aus, ohne daß deshalb Unterbringungsschwierigkeiten innerhalb des eigentlichen Aufnahmeraumes für die Klimaanlage vorliegen.

Es ist auch möglich, über die Breite des Omnibusses verteilt eine Anzahl von Luftansaugöffnungen so anzubringen, daß sie unterhalb der die einzelnen Sitzplätze voneinander trennenden Armstützen befinden, so daß der Luftstrom zu jeder Ansaugöffnung hin an den Beinen der sitzenden Personen vorbei strömt.

Gemäß einer Ausgestaltung der Erfindung ist es aber von Vorteil, daß zwischen dem Fahrgastraum und der Ansaugöffnung ein Ansaugkanal gebildet ist, der nach oben hin durch die Hecksitzbank begrenzt ist. Dieser Ansaugkanal, der sich bevorzugt über die gesamte Breite des Fahrzeuges erstreckt, bewirkt es, daß die Luftgeschwindigkeit im Bereich der Beine der sitzenden Personen noch verhältnismäßig klein ist und erst im Bereich der Luftansaugöffnung zunimmt. Ferner sind hiedurch die im Bereich der Ansangöffnung entstehenden oder durch sie nach außen dringenden Geräusche noch besser gegenüber den Fahrgästen abgeschirmt. Schließlich ist es auch möglich, den Raum unter der Hecksitzbank in begrenztem Maße als Gepäckablage zu nutzen, soweit Gepäckstücke nicht die eigentliche Luftansaugöffnung selbst verstellen, da der zur Verfügung stehende Ansaugquerschnitt im Bereich der Vorderkante der Sitzbank außerordentlich groß ist und somit ohne Nachteile durchaus durch die Ablage des einen oder anderen Gepäckstückes verkleinert werden kann.

Die durch die genannte Ausgestaltung der Erfindung erreichten Vorteile werden dadurch noch vertieft, daß man, wie es gemäß einer weiteren Ausgestaltung der Erfindung vorgesehen ist, den Ansaugkanal nach hinten und oben abknickt, da sich die Luftansaugöffnung bzw. Luftansaugöffnungen hinter der Lehne der Hecksitzbank befinden.

Es wird somit der Ansaugkanal verlängert und dessen geräuschabschirmende und die Lufströmung beruhigende Wirkung noch weiter verbessert. Außerdem ist es bei einem Omnibus gemäß der letztgenannten Ausgestaltung nicht möglich, durch ein unter die Hecksitzbank gezogenes Gepäckstück die Ansaugöffnung abzudecken.

Ein weiterer, baulicher Vorteil der letztgenannten Ausgestaltung liegt darin, daß sich die Luftansaugöffnung an der Unterseite des Aufnahmeraumes für die Klimaanlage befindet, so daß die Anbringung eines komplizierten Luftkanales im Motorraum nicht erforderlich ist.

Um das Betriebsgeräusch der Luftumwälzungseinrichtung noch weiter zu vermindern und um insbesondere zu verhindern, daß die an der Ansaugöffnung erzeugten oder durch diese nach außen dringenden Geräusche durch den Sitz oder die Lehne der Hecksitzbank hörbar werden, wird es gemäß einer weiteren Ausgestaltung der Erfindung vorgeschlagen, die den Ansaugkanal begrenzende Oberfläche der Hecksitzbank mit einer schalldämmenden Beschichtung zu versehen.

Außerdem ist es gemäß einer weiteren Ausgestaltung der Erfindung von Vorteil, bereits in dem durch die Hecksitzbank begrenzten Ansaugkanal Einrichtungen zum Leiten und/oder Reinigen der Luft anzuordnen, etwa in Form einer Luftumlenkung, um Staubanteile ausfallen zu lassen, oder durch die Anordnung einer Filtereinheit unterhalb der Hecksitzbank, um die angesaugte Luft mindestens teilweise zu filtern.

Gemäß einer weiteren Ausgestaltung der Erfindung ist es von Vorteil, die Hecksitzbank nach oben abnehmbar, und zwar vorzugsweise nach oben abklappbar, auszubilden, so daß mühelos Zugang zur Luftansaugöffnung und zu den in der Regel hinter diesen angebrachten Filtern möglich ist.

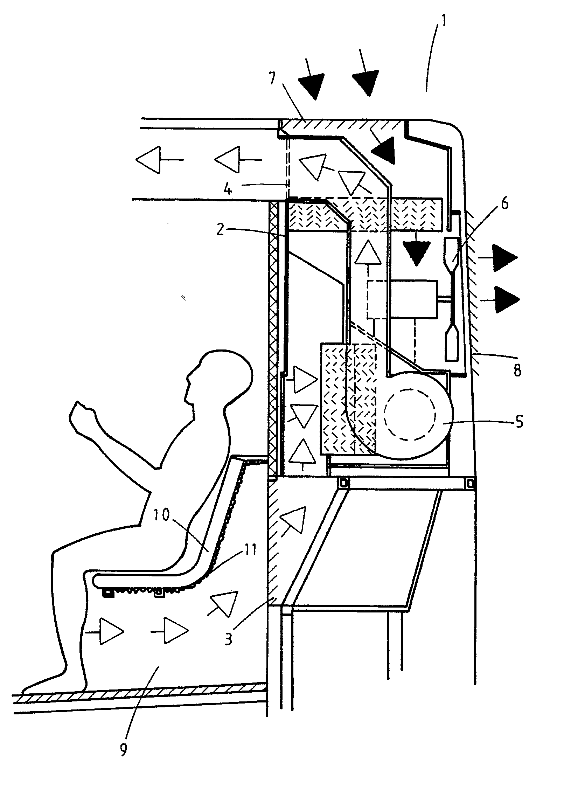

Der Gegenstand der Erfindung wird anhand der beigefügten, schematischen Zeichnung beispielsweise noch näher beschrieben, in deren einziger Figur der schematische Aufriß durch das Heck 1 eines Omnibusses gezeigt ist.

Das Omnibusheck 1 weist zwei übereinanderliegende, gegenüber dem Fahrgastraum abgetrennte Räume ein, nämlich einen unteren Motorraum und einen oberen Aufnahmeraum 2 für eine Klimaanlage.

Dieser Aufnahmeraum 2 steht über eine Ansaugöffnung 3 mit dem Fahrgastraum in Verbindung, sowie über einen Luftaustritt 4 mit einem Verteilerkanal für klimatisierte Luft.

Die Luftströmung ist durch nicht ausgefüllte Pfeile gezeigt und wird durch ein Umluftgebläse 5 erreicht, welches als starkes Radialgebläse ausgebildet ist.

Im Aufnahmeraum für die Klimaanlage befindet sich ein weiteres Gebläse 6, welches in einem Schacht angeordnet ist, der eine im Dach befindliche Kühlluftansaugöffnung 7 mit einer im Heck befindlichen Kühlluftaustrittsöffnung befindet. Innerhalb des Schachtes befinden sich die zu kühlenden Teile einer Kältemaschine; die Luftströmung durch diesen Schacht ist durch schwarze, ausgefüllte Pfeile gezeigt.

Die beiden Luftführungen für den Aufnahmeraum und die Klimaanlage können miteinander verbunden sein, um der klimatisierten, durch die Austrittsöffnung 4 ausgeblasenen Luft Frischluft beizubringen, die durch die Kühlluftansaugöffnung 7 angesaugt wird. Es ist auch erforderlich, dafür zu sorgen, daß im Fahrgastraum kein Unterdruck entsteht, da durch diesen sonst unter Umständen Motorabgase in den Innenraum gesaugt werden könnten, in jedem Falle aber warme Außenluft In den Innenraum gesaugt wird.

Wie aus der Zeichnung ersichtlich, ist die Ansaugöffnung 3 etwa in Höhe der Lehne einer Hecksitzbank 10 angebracht. Diese Hecksitzbank 10 ist als eine Sitzschale mit Sitzfläche und Sitzlehne ausgebildet und ruht auf Querträgern. Das obere Ende der Rückenlehne ist dicht mit der Rückwand des Fahrgastraumes verbunden. Es wird somit zusammen mit dem Boden des Omnibusses von der Hecksitzbank 10 ein Ansaugkanal 9 begrenzt, durch welchen die Luft vor dem Eintritt in die Ansaugöffnung 3 strömt. Die Hecksitzbank 10 kann nach oben geklappt werden (nicht gezeigt).

Es ist erkennbar, daß die durch weiße Pfeile dargestellte, in die Ansaugöffnung 3 eingesaugte Umluft in keiner Weise das Wohlbefinden der dargestellten Person beeinträchtigt, welche auf der Hecksitzbank 10 sitzt. Außerdem ist diese Person gegenüber der im Bereich der Ansaugöffnung 3 entstehenden bzw. durch diese nach außendringenden Geräusche abgeschirmt. Die Abschirmung wird noch dadurch verbessert, daß die Rückseite und Unterseite der Hecksitzbank 10 mit einem schalldämmendem Material 11 beschichtet ist, welches gleichzeitig noch dazu dient, die untere Fläche der Hecksitzbank 10 soweit zu glätten, daß nicht etwa vorspringende Teile zur Bildung von Wirbeln führen.

## Patentansprüche

1. Luftumwälzungseinrichtung für einen Omnibus mit einer Luftführung unter der Hecksitzbank (10), dadurch gekennzeichnet,
   - daß hinter der Sitzlehne der Hecksitzbank (10) und im Abstand zu ihr eine Ansaugöffnung (3) vorgesehen ist, die mit einem gegenüber dem Fahrgastraum abgschotteten, etwa in Kopfhöhe des Fahrgastes befindlichen Gebläse (5) verbunden ist,
   - daß am Gebläseausgang ein vertikaler, ebenfalls vom Fahrgastraum abgeschotteter Luftschacht angeschlossen ist,
   - und daß der vertikale Luftschacht in seitlich unterhalb des Wagendaches verlaufende Verteilerkanäle mündet.

2. Luftumwälzungseinrichtung nach Anspruch 1, gekennzeichnet durch einen von der Hecksitzbank (10) begrenzten, die Ansaugöffnung (3) mit dem Fahrgastraum verbindenden Ansaugkanal (9).

3. Luftumwälzungseinrichtung nach Anspruch 2, dadurch gekennzeichnet, daß der Ansaugkanal (9) zur Ansaugöffnung (3) hin nach oben geknickt ist, und daß sich die Ansaugöffnung (3) etwa in gleicher Höhe hinter der Rücklenne der Hecksitzbank (10) befindet.

4. Luftumwälzungseinrichtung nach Anspruch 2 oder 3, dadurch gekennzeichnet, daß mindestens die von der Hecksitzbank (10) gebildete Begrenzung des Ansaugkanales (9) mit schalldämmendem Material (11) beschichtet ist.

5. Luftumwälzungseinrichtung nach Anspruch 2 bis 4, dadurch gekennzeichnet, daß im Ansaugkanal (9) Einrichtungen zum Leiten und/oder Reinigen der Luft angeordnet sind.

6. Luftumwälzungseinrichtung nach Anspruch 1 bis 5, dadurch gekennzeichnet, daß zum Herstellen eines freien Zuganges zur Ansaugöffnung (3) die Hecksitzbank (10) mindestens zum Teil aufklappbar ist.

## Claims

1. An air-circulation apparatus for a bus, having an air supply under the rear seat (10), **characterized in that**
   - a suction opening (3) is provided behind the back of the rear seat (10) and at a distance therefrcm, the suction opening (3) being connected to a fan (5) partitioned cff from the passenger compartment and situated substantially at the head height of the passenger;
   - a vertical air shaft likewise partitioned off from the passenger compartment is connected to the fan outlet,
   - end the vertical air shaft opens into distributor ducts extending laterally below the roof of the vehicle.

2. An air-circulation apparatus according to Claim 1, **characterized** by a suction duct (9) bounded by the rear seat (10) and connecting the suction opening (3) to the passenger compartment.

3. An air-circulation apparatus according to Claim 2, **characterized in that** the suction duct (9) is turned upwards towards the suction opening (3), and the suction opening (3) is situated substantially at the same height behind the back rest of the rear seat (10).

4. An air-circulation apparatus according to Claim 2 or 3, **characterized in that** at least the boundary of the suction duct (9) formed by the rear seat (10) is covered with a sound-absorbing material (11).

5. An air-circulation apparatus according to Claims 2 to 4, **characterized in that** devices for guiding and/or cleaning the air are arranged in the suction duct (9).

6. An air-circulation apparatus according to Claims 1 to 5, **characterized in that** the rear seat (10) can be swung up at least in part in order to provide free access to the suction opening (3).

## Revendications

1. Dispositif de circulation d'air pour un autobus avec une conduite d'air sous la banquette arrière (10), dispositif caractérisé en ce que :

- derrière le dossier de la banquette arrière (10) et à une certaine distance de celle-ci, il est prévu un orifice d'aspiration (3), qui est relié à un ventilateur (5) se trouvant à hauteur de la tête du passager, séparé par une cloison étanche de la cabine des passagers,

- à la sortie du ventilateur est reliée une cheminée d'aération également séparée par une cloison étanche de la cabine des passagers,

- et la cheminée d'aération verticle déboucle dans des canaux de distribution s'étendant latéralement endessous du toit du véhicule.

2. Dispositif de circulation d'air salon la revendication 1, caractérisé par un canal d'aspiration (9) jouxté par l'une des banquettes arrière (10), reliant l'orifice d'aspiration (3) à la cabine des passagers.

3. Dispositif de circulation d'air selon la revendication 2, caractérisé en ce que le canal d'aspiration (9) est coudé vers le haut en direction de l'orifice d'aspiration (3) et en ce que l'orifice d'aspiration (3) se trouve sensiblement à la même hauteur derrière le dossier de la banquette arrière (10).

4. Dispositif de circulation d'air selon la revendication 2 ou 3, caractérisé en ce qu'au moins la limite, constituée par la banquette arrière (10), du canal d'aspiration (9) est garnie d'une couche de matériau (11) amortissant le son.

5. Dispositif de circulation d'air selon la revendication 2 ou 4, caractérisé en ce que dans le canal d'aspiration (9) sont disposés des dispositifs pour canaliser et/ou purifier l'air.

6. Dispositif de circulation d'air selon les revendications 1 à 5, caractérisé en ce que pour ménager un accès libre à l'orifice d'aspiration (3), la banquette arrière (10) peut être repliable en partie au moins.